Europäisches Patentamt

**European Patent Office**

**Office européen des brevets**

(11) Publication number: **0 180 507**
**B1**

(12) **EUROPEAN PATENT SPECIFICATION**

(45) Date of publication of patent specification: **16.05.90**

(21) Application number: **85402009.6**

(22) Date of filing: **16.10.85**

(60) Divisional application **89115656.4 filed on 16/10/85.**

(51) Int. Cl.⁵: **B 21 D 53/26**

(54) Styled wheel and apparatus for forming same.

(30) Priority: **01.11.84 US 667338**

(43) Date of publication of application:
**07.05.86 Bulletin 86/19**

(45) Publication of the grant of the patent:
**16.05.90 Bulletin 90/20**

(84) Designated Contracting States:
**DE FR GB**

(56) References cited:
**DE-A-2 813 952**
**US-A-4 279 287**
**US-A-4 354 407**

(73) Proprietor: **MOTOR WHEEL CORPORATION**
**4000 Collins Road**
**Lansing Michigan 48910 (US)**

(72) Inventor: **Daudi, Anwar R.**
**1150 Chartwell Carriage Way S.**
**E. Lansing Michigan 48823 (US)**

(74) Representative: **Lemoine, Michel et al**
**Cabinet Michel Lemoine et Bernasconi 13**
**Boulevard des Batignolles**
**F-75008 Paris (FR)**

Courier Press, Leamington Spa, England.

## Description

The present invention relates to the art of vehicle wheel manufacture, and more particularly to correction of variations in the radial runout and/or radial force variations in a pneumatic tire and wheel assembly.

An apparatus for forming bolt openings according to the pre-characterising part of claim 1 is known from US—A—4279287.

Background of the invention

A problem long-standing in the art lies in the production of pneumatic tires and wheels which, when assembled and operated on a vehicle, run true about their axis of rotation. Forces generated by any circumferential variations in the tire carcass and/or out-of-round condition in the tire or wheel cause vibrations, which in turn lead to dissatisfied customers and significant warranty claims against automobile manufacturers. The present trend among manufacturers toward higher tire inflation pressures and smaller vehicles to improve fuel economy accentuates this problem, so that uniformity of radial runout and force vibrations of the tire and wheel assembly has become more critical than in the past.

Vehicle wheels conventionally include a circular array of disc bolt openings adapted to receive mounting studs for mounting the wheel to a vehicle, and a centre pilot opening adapted to be received over the wheel hub. It has been and remains conventional practice in the industry to attempt to form the bolt mounting circle and centre-pilot openings coaxially with each other and with the tire rim bead seat, with the goal thus being a perfect true-running wheel. A number of techniques have been proposed for accomplishing this result, including formation of the bolt and centre openings with a single tool while locating off of the bead seat, machining the centre opening while locating off of the pre-formed bolt-mounting openings, and/or circumferentially permanently deforming the rim bead seats while locating off of the bolt-mounting and/or centre-pilot openings.

A particular problem is encountered in connected with so-called styled wheels which possess a deep-drawn neck or cone integrally projecting from the disc surrounding the centre-pilot opening to simulate a styled hub cap. It is conventional practice in manufacture of such wheels to machine the inside surface or ID at the base of the styled neck or cone while locating off of the bead seats to obtain concentricity between the centre opening and bead seats. Such a separate machining operation is expensive to implement and tends to weaken the disc structure at the base of the styled centre cone.

Patents US—A—4,279,287 and US—A—4,354,407 depart from the conventional practice of attempting to form a true-running wheel, and address the problem of radial runout and/or radial force variations in a pneumatic tire and wheel assembly by intentionally forming the bolt-mounting and/or centre-pilot openings in the wheel disc at the time of wheel manufacture on an axis which is eccentrically offset from the average axis of the bead seats on the wheel rim. This offset is in a direction and amount which is predetermined to locate the low point or high point of the first harmonic of beat seat radial runout circumferentially adjacent to a selected location on the wheel rim. In the preferred embodiments, the low point of the first harmonic of bead seat radial runout lies substantially within a quadrant centered about the valve hole in the rim. A pre-tested tire having the location of the high point of the first harmonic of radial force variation marked thereon may then be assembled onto the wheel such that the respective tire and wheel harmonics are complementary and thereby tend to cancel each other.

In the preferred wheel forming apparatus disclosed in the noted U.S. patents, the bolt and centre-pilot openings are formed by separate punches fixedly mounted on a single punch assembly which simultaneously punch-forms all of the openings in a wheel disc while the wheel is located by fixturing the same about the rim bead seats. Although the method and apparatus disclosed in the reference patents, as well as the wheels formed thereby, have enjoyed substantial success and acceptance in the art, a problem lies in the fact that the relationship of the bolt hole circle and centre-pilot opening with respect to each other is fixed at the time of die manufacture and cannot be readily adjusted thereafter. Another problem is encountered in connection with application of this technology to manufacture of styled wheels wherein the centre-pilot surface at the base of the styled disc cone cannot be readily formed while the bolt hole openings are formed.

Objects and summary of the invention

It is therefore an object of the present invention to provide an apparatus for manufacturing a vehicle wheel of the described type wherein the centre-pilot and bolt-mounting openings are accurately and adjustably positioned with respect to each other and with respect to the average axis of the rim bead seats.

A further and yet more specific object of the invention is to provide an economical and accurate apparatus for locating the axis of the centre-pilot openings and/or the rim bead seats.

A further object of the invention is to provide a wheel manufacturing apparatus which is economical to implement in mass production of vehicle wheels.

It is yet another object of the invention to provide an apparatus of the described character wherein the location of the centre of the bolt-hole circle, the axis of the centre-pilot opening, and the average axis of the rim bead seats are all adjustable with respect to each other, so that the apparatus of the invention may be implemented in manufacture of true-running wheels wherein all axes and centres are nominally concentric, or in the manufacture of wheels wherein the low point or high point of the first harmonic of average bead seat radial runout is eccentrically offset with respect to either or both of the bolt or centre-pilot openings in the wheel disc by an amount and in a direction predetermined to locate the low point or high point of the first harmonic of bead seat radial runout circumferentially adjacent to a selected location on the wheel rim.

In summary, the foregoing and other objects of the invention are accomplished by an apparatus according to claim 1, which enables the forming of the bolt and centre-pilot openings at separate stages of a continuous machine motion against the disc of a preassembled rim and disc while the rim is clamped and located around the bead seats. The wheel forming apparatus in accordance with the preferred embodiment of the invention includes a planar circumferential array of jaws mounted for radial reciprocation into engagement with the rim bead seats to fixture and hold a preassembled rim and disc and thereby define an average bead seat axis. An upper die assembly is mounted above the planar jaw array and includes punches for piercing and coining the bolt-mounting openings in a wheel fixtured by the jaws. A lower die assembly is mounted beneath the jaw array to engage and hold the wheel disc as the bolt openings are pierced. The lower die assembly and the circumferential jaw array are carried for conjoint downward motion about a fixed centre column under pressure from continued downward motion of the upper die assembly against the wheel disc. A swage punch is mounted on the upper end of the fixed centre column to engage and form the centre-pilot opening as the disc is carried downwardly thereagainst by the die assemblies.

The axis of the centre column and the conjoint axis of reciprocation of the upper and lower die assemblies (nominally) define the axis of the bolt-hole circle formed in the wheel disc. The jaws which locate the average bead seat axis are individually adjustable with respect to the die axis, so that the average bead seat axis and bolt hole axis may be aligned, or may be laterally offset as taught by the above-referenced patents. Likewise, the axis of the punch on the centre column is laterally selectable with respect to the column/die axis to accommodate coaxial positioning of the centre-pilot opening with the average bead seat axis, and/or alignment with the bolt-opening axis, and/or eccentric offsetting from both.

Operation of the apparatus of the invention thus in general contemplates fixturing of a preformed disc and rim so as to locate the average bead seat axis. A first or upper die assembly having bolt-opening punches mounted thereon is brought into engagement with the disc while a second or lower die assembly engages the opposing disc face to support the same as the bolt openings are formed. Continued downward motion of the upper die assembly after forming the bolt openings pushes the lower die, bead seat locators and wheel downwardly against a fixed punch which engages the wheel disc and forms the centre-pilot opening.

Brief description of the drawings

The invention, together with additional objects, features and advantages thereof, will be best understood from the following detailed description, and the accompanying drawings in which:

Fig. 1 is a fragmentary outboard elevational view of a vehicle tire and wheel assembly which includes a styled vehicle wheel;

Fig. 2 is a fragmentary inboard elevational view on an enlarged scale of the bolt and centre-pilot opening region in the wheel of Fig. 1;

Fig. 3 is a sectional view of the wheel of Fig. 1 taken substantially along the line 3—3 of Fig. 1;

Figs. 4—7 are fragmentary sectioned elevational views of apparatus for forming the bolt and centre-pilot openings in the wheel of Figs. 1—3 at respective successive states of operation;

Fig. 8 is a fragmentary sectioned elevational view of a modified apparatus in accordance with a preferred embodiment of the invention for forming bolt and centre-pilot openings in an alternative wheel configuration;

Fig. 9 is a fragmentary sectional view taken substantially along the line 9—9 in Fig. 8; and

Fig. 10 is a fragmentary sectional view taken substantially along the line 10—10 in Fig. 2.

Detailed description of the preferred embodiments

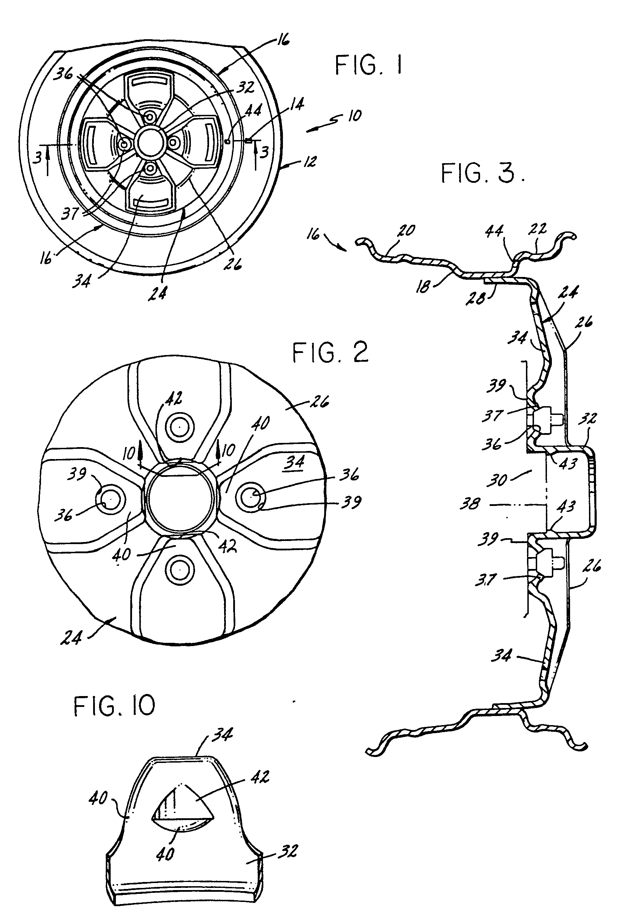

Fig. 1 illustrates a pneumatic tire and wheel assembly 10 as comprising a pneumatic tire 12 pretested for variations in radial force under dynamic operating conditions and having the circumferential location of a peak of the first harmonic of radial force variation marked at 14 on the tire sidewall. Tire 12 is mounted on a wheel 16. Referring collectively to Fig. 1—3 and 9, wheel 16 includes a wheel rim 18 having inboard and outboard bead seat regions 20, 22 for receiving respective inboard and outboard bead toes of tire 12 in the usual manner. Bead seat regions 20, 22 define an average bead seat axis which may be located using conventional test techniques.

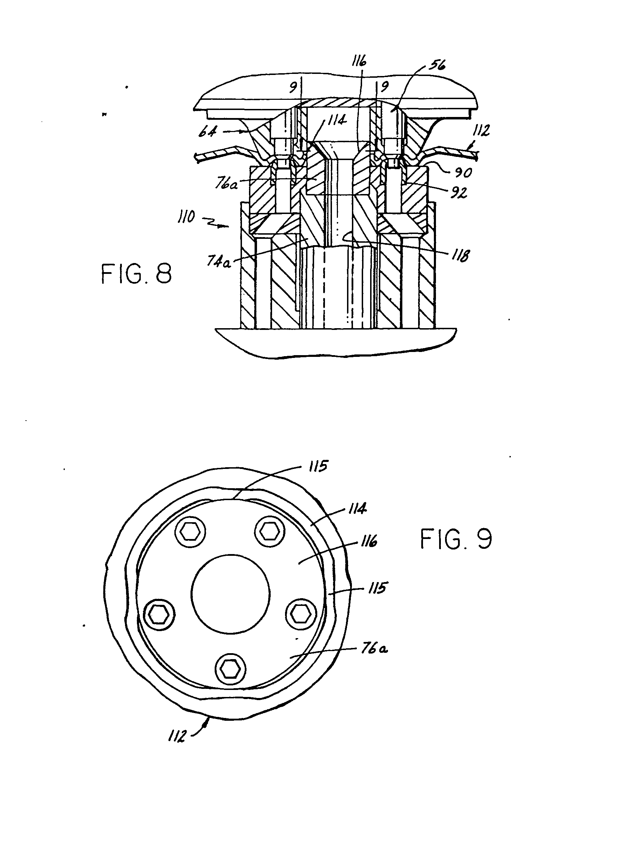

A wheel mounting disc 24 is affixed to and internally spans rim 18 for mounting wheel 16 and assembly 10 on a vehicle. In the ornamental vehicle wheel illustrated in the drawings, disc 24 includes a circumferential series of radially directed axially raised spoke-simulating portions 26 which extend from the disc peripheral flange 28 radially inwardly to a hubcap-simulating cone 32 which surrounds the disc centre opening 30. Raised spoke-simulating disc portions 26 are circumferentially separated from each other by the radially directed axially inwardly depressed disc portions 34, which likewise extend from flange 28 to cone 32. Bolt openings 36 are formed in a circular array, one within each of the depressed disc portions 34 adjacent to cone 32 in a corresponding, slightly raised, bolt hole island 37. Bolt openings 36 are circularly arrayed on a bolt-circle axis. Each of the depressed disc portions 34 terminates in a radially inwardly directed shoulder 40 (Figs. 2 and 9) which collectively define the centre-pilot opening which is received over and pilots wheel 16 on a spindle hub 38, as illustrated in phantom in Fig. 3. Hubcap-simulating cone 32 projects integrally axially outboard from shoulders 40 surrounding centre opening 30.

An arcuate radially inwardly directed land 42 is formed on each shoulder 40, with the several lands 42 being on a common imaginary cylinder of revolution which defines the effective axis of centre opening 30. Lands 42 are preferably formed following assembly of wheel 16 so as to place the pilot axis at a predefined relationship with respect to the average axis of bead seat regions 20, 22 and/or the axis of the circle of bolt openings 36. Such pilot axis may be nominally concentric or coaxial with the average bead seat axis and/or the bolt-hole circle axis, or may be radially offset from either or both of such axes. Where one or both of the centre-pilot and bolt-opening axes are intentionally eccentrically offset from the average bead seat axis, it is preferred to locate a peak of the first harmonic of radial runout adjacent to the wheel valve opening 44. Tire indicia 14 is then located in assembly in radially adjacent alignment with the valve hole 44 so that the intentionally-created first harmonic of wheel radial runout tends to cancel the first harmonic of radial force variation of the tire.

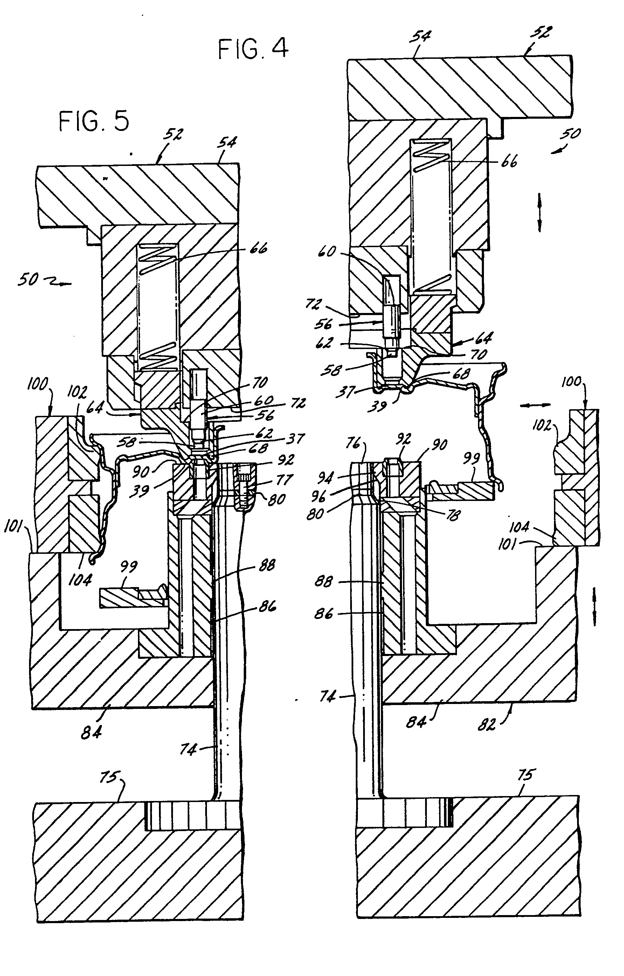

Figs. 4—7 illustrate apparatus 50 for forming bolt and centre-pilot mounting openings in the wheel of Figs. 1—9. Apparatus 50 includes an upper die assembly 52 having a base 54 coupled to a hydraulic drive or the like (not shown) for driving upper die assembly 52 in a vertical reciprocating motion. A plurality of bolt-opening punches 56 are affixed to base 54 in a downwardly dependently oriented circular array concentric with the axis of vertical reciprocation. Each punch 56 includes a substantially cylindrical tip 58 for piercing a bolt opening in a wheel disc, a base 60 affixed to the die base, and an intermediate conical shoulder 62 which engages the disc subsequent to piercing of the bolt openings by tip 58 and coins the outboard edge of the pierced bolt openings. A die head or stripper 64 is mounted for lost-motion axial movement on base 54 at the lower face thereof surrounding punches 56. A plurality of coil springs 66 normally bias head 64 downwardly of base 54 to the position shown in Fig. 4 of the drawings. The lowermost portion of head 64 is contoured as at 68 to engage the wheel disc surrounding the raised bolt-hole islands 37, and is apertured to receive wheel disc cone 32 and permit passage of bolt hole punches 56 therethrough. A flat upper surface 70 on head 64 cooperates with an opposing flat lower surface 72 on base 54 to define a stop so as to limit upward relative motion of head 64 with respect to and into base 54.

A cylindrical column 74 is mounted to a fixed lower base 75 and projects upwardly therefrom coaxially with the vertical axis of reciprocation of upper die assembly 52. A swage punch 76 is mounted by a bolt 77 on the upper end of column 74. The diameter of swage punch 76 is less than the diameter of column 74, with the upper end of column 74 having an upwardly tapering conical shoulder 78 and a flat upper surface 80 perpendicular to the axis of die reciprocation onto which punch 76 is mounted. A lower die assembly 82 is mounted for guided axial sliding motion on and with respect to fixed centre column 74. Lower die assembly 82 includes a lower die base 84 having a centre bore 86 received over column 74 and radially inwardly oriented shoulders 88 in sliding engagement therewith. Die assembly 82 has a planar upper surface 90 perpendicular to the axis of die reciprocation and adapted to receive a wheel disc on the mounting surface thereof defined by a depressed circular shoulder 39 surrounding each raised bolt hole island 37. In the initial position of lower die assembly 82 illustrated in Fig. 4, disc mounting surface 90 is coplanar with the upper surface of punch 76.

A circumferential array of buttons 92 is mounted on lower die assembly 82 and these buttons project upwardly from surface 90 so as to be individually received from the inboard direction within the pockets defined by wheel disc islands 37. Buttons 92 angularly locate the preassembled disc and rim with respect to die assemblies 52, 82. A shoulder 94 slidably engages punch 76 and has a conical lower edge 96 complementary to surface 78 on column 74.

A circumferential array of jaws 100 are slidably mounted for conjoint radial reciprocation on a planar surface 101 of lower die assembly base 84 perpendicular to column 74. Each jaw 100 includes a pair of horns 102, 104 contoured for engagement from the outward radial direction with the outboard and inboard bead seats of the preassembled rim and disc. Most preferably, the wheel-engaging positions of the several jaws 100 are individually adjustable. Jaws 100 are coupled by roller cams (not shown) to upper die assembly 52 such that initial downward motion of upper die assembly 52 between the positions of Figs. 4 and 5 cams jaws 100 conjointly radially inwardly. A carrier ring 99 is likewise coupled to upper die assembly 52 (by means not shown) for conjoint motion therewith coaxially with column 74 between an upper wheel-receiving position (Fig. 4) and a lower position (Figs. 5—7) beneath the plane of jaws 100.

In operation, a disc wheel is preformed so as to include rim 18 having inboard and outboard bead seat regions 20, 22, and a wheel mounting disc 24 carried interiorly of the wheel rim. The rim and disc illustrated in the drawings are preferably separately formed to the contours shown in any suitable blanking, bending, rolling and/or forming operation, and are joined to each other as by welding or the like where the outer periphery 28 of wheel disc 24 engages the inner surface of rim 18. Apparatus 50 receives such a preformed rim and disc manually or in an automated operation for the purpose of forming the bolt and centre-pilot mounting openings therein.

Initially, the preformed rim and disc is received and held on ring 99, which engages the rim inboard bead seat as shown in Fig. 4. Upper die assembly 52 is then moved downwardly (from a position not shown) into engagement with the outboard disc face (Fig. 4). Continuous downward motion of upper die assembly 52 moves the inboard disc face against lower die assembly surface 90, and then closes jaws 100 to engage the rim bead seats.

The preformed rim and disc is thus positioned on lower die assembly surface 90 with buttons 92 received within the pockets of bolt hole islands 37. Jaws 100 are in the positions illustrated in Figs. 5—7 wherein the horns 102, 104 engage and hold rim bead seats 22, 20. The several jaws 100 are preadjusted during a set-up operation so that the average bead seat axis defined by the engaged bead seat regions has a predetermined relationship to the axis of die reciprocation, either nominally coaxial or eccentrically offset therefrom by a predetermined amount. The axis of the circle of bolt holes to be formed by punches 56 is preferably co-incident with the axis of die reciprocation. Thus, the several jaws 100 locate the average bead seat axis coaxially with the bolt hole circle axis or place such average bead seat axis at a position eccentrically offset from the axis of the bolt-hole circle by a preselected amount in accordance with the teachings of the above-referenced patents. With the wheel so fixtured by the locating jaws 100, downward propulsion of upper die assembly 52 is continued in an uninterrupted motion to and through the positions illustrated in successive Figs. 5—7.

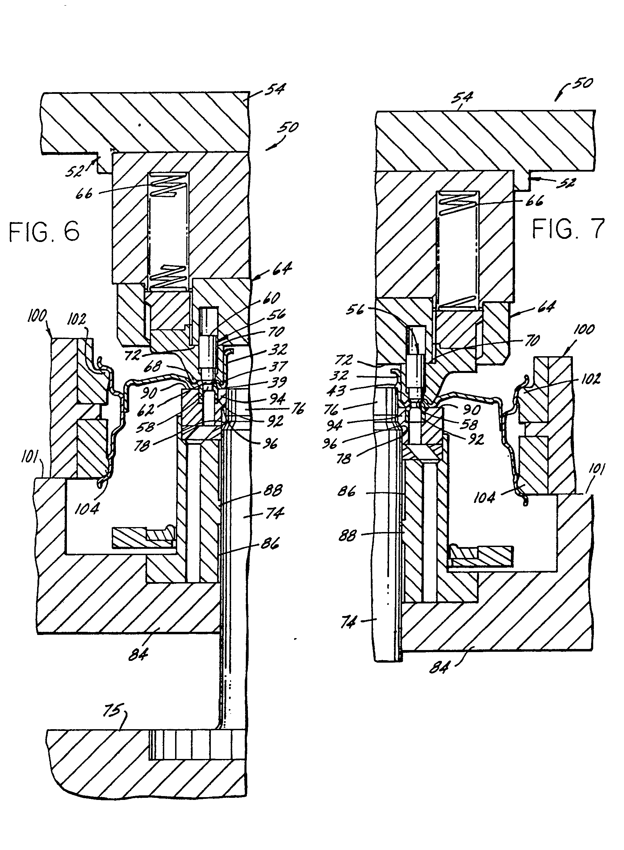

As upper die assembly 52 is propelled downwardly from the position of Fig. 4 toward the position of Fig. 5, the annular bosses 68 on upper die head or stripper 64 initially engage the wheel disc around the several bolt hole islands 37, and thus cooperate with buttons 92 on lower die assembly 82 to clamp the bolt hole islands against deflection and to hold the wheel disc firmly against lower die mounting surface 90. With upper die head 64 thus engaged with the wheel mounting disc (Fig. 5), continued downward motion of upper die assembly 52 results in lost-motion of die base 54 over die head 64 against the force of springs 66. Punches 56 are thus propelled through apertures in die head 64 so that the punch tips 58 engage and pierce circular bolt openings in the fixtured wheel disc. Further downward motion of upper die assembly 52 brings punch conical shoulders 62 into engagement with the outboard rim of the pierced bolt holes so as to coin each of the pierced bolt holes. At this position (Fig. 6), opposing stop surfaces 70, 72 on die head 64 and die base 54 are in facing abutment so as to stop or arrest further downward motion of die base 54 with respect to die head 64. The several bolt opening punches 56 are positioned on base 54 so that such stop-position (Fig. 6) of base 54 with respect to head 64 corresponds to completion of the coining operation on the pierced bolt openings.

Continued downward motion of upper die assembly 52 from the position of Fig. 6, wherein piercing and coining of the bolt openings is completed, toward the position of Fig. 7 is transmitted to lower die assembly 82 through abutting stop surfaces 70, 72, die head 64 and the thickness of the wheel disc. Lower die assembly 82 and locating jaws 100 mounted thereon thus move downwardly with respect to centre column 74 until the conical surfaces 78, 96 are in abutting relation (Fig. 7). During such downward motion, disc shoulders 40 are drawn downwardly against and over the upper outside edge of punch 76. The diameter of the punch edge is greater than the preformed inside diameter of the disc shoulders, and in fact corresponds to the diameter of the wheel mounting hub (38 in Fig. 3) over which the wheel is to be mounted in use on a vehicle. Thus, punch 76 shears material from the disc shoulder to form lands 42, with excess material being "plowed" to form ledges 43. The inside diameter so sheared is accurately positioned and dimensioned for operation as a centre-pilot opening. Shear punch 76 is designed either to locate the axis of such land inside diameter nominally coincident with the axis of column 74 and thus with the bolt hole circle, and/or coincident with the average bead seat axis, and/or eccentrically offset from one or both by a predetermined amount and direction. This may be accomplished by making punch 76 eccentric and rotatably adjustable on column 74 to achieve differing positions of the center-opening axis. From the position of Fig. 7, upper die assembly 52 is withdrawn vertically upwardly, with lower die assembly 82 returning to the rest position of Figs. 4—6. Jaws 100 are retracted and ring 99 lifts the wheel. The wheel may then be withdrawn from the forming apparatus.

Figs. 8 and 9 illustrate a modified apparatus 110 for forming the bolt and centre-pilot mounting openings in a so-called turned-neck centre wheel 112. In wheel 112 illustrated in Figs. 8 and 9, the flange 114 which surrounds and defines the preformed centre opening is terminated at about the level of the outboard surface of the bolt hole islands, and does not project outwardly therefrom to form a hub cone as in the styled wheel previously discussed. As best seen in Fig. 9, flange 114 is substantially circular, with radially inward depressions 115 being positioned between each bolt opening island and the wheel axis. The structure and principles of operation of the apparatus 110 are similar to those previously discussed in detail in connection with Figs. 4—7, and need not be repeated. One important feature of the apparatus 110 illustrated in Fig. 8, which was not embodied in the apparatus of Figs. 4—7, contemplates a central bore 116 in swage punch 76a, which flares outwardly to the uppermost surface of the punch. Bore 116 is aligned in assembly with a central bore 118 in column 74a. Thus, in the embodiment of Figs. 8 and 9, the material which is sheared from the inside diameter of the centre opening flange depressions 115 will fall by gravity through openings 116, 118 for disposal.

**Claims**

1. Apparatus (50 or 110) for forming bolt openings (36) and a centre-pilot mounting opening (30) in a preformed vehicle wheel (16 or 112) which includes a rim (18) having a tire bead seat region (20, 22) and a wheel mounting disc (24) carried internally of said rim (18), said apparatus comprising:

a circumferential series of locating means (100) disposed in a planar array for selectively engaging and holding said bead seat region (20, 22) on a first axis,

a first die assembly (52) mounted on one side of said planar array for reciprocation in the direction of said first axis into engagement with one face of the disc (24) of a wheel (16 or 112) engaged and held by said locating means (100), including a plurality of first punches (56) for piercing said disc (24) to form said bolt openings (36), the whole of said bolt openings (36) being centered on a second axis,

means for forming said centre-pilot opening (30),

first positioning means for selectively and individually positioning said locating means (100) and consequently said first axis with respect to said second axis so as to provide a preselected relationship of said second axis to said first axis; and

a second die assembly (82) on the opposing side of said array for engaging the opposing face of said disc (24) to support said disc (24) against deflection due to engagement by said first die assembly (52),

characterized in that it comprises:

punching means (74, 76 or 74a, 76a) mounted in fixed position on said opposing side of said planar array and including a shear punch (76 or 76a) for engaging said opposing face of said disc (24) to form said centre-pilot opening (30),

second positioning means (77) for selectively positioning the axis of said shear punch (76 or 76a) with respect to said first axis, said apparatus being further characterized in that

said second die assembly (82) is mounted for conjoint motion with said locating means (100) parallel to the direction of said first and second axes so as to allow said disc (24) to be brought into forming engagement with said shear punch (76 or 76a) while said rim bead seat region (20, 22) is engaged and held by said locating means (100).

2. The apparatus (50 or 110) set forth in claim 1, characterized in that said first die assembly (52) includes a die base (54) having said plurality of first punches (56) affixed thereto and projecting axially therefrom in a circular array about said second axis to pierce said bolt openings (36), a die head (64) mounted for axial movement on said die base (54), means (66) biasing said die head (64) with respect to said base (54) in the direction of said planar array, and stop means (70, 72) for limiting motion of said head against said biasing means (66), said stop means (70, 72) being so positioned with respect to said first punches (56) and said base (54) that said bolt openings (36) are pierced and formed by said first punches (56) prior to engagement of said stop means (70, 72).

3. The apparatus (50 or 110) set forth in claim 1, characterized in that said engaging means (74, 76 or 74a, 76a) comprises a centre column (74 or 74a) which is fixedly mounted at one end and shear shear punch (76 or 76a) mounted at the opposing end of said column (74 or 74a) to form said centre-pilot opening (30), said second die assembly (82) having a centre opening (86) slidably surrounding said shear punch (76 or 76a) and said column (74 or 74a).

4. The apparatus (50 or 110) set forth in claim 3, characterized in that said second positioning means (77) consists of a rotary eccentric mounting of said shear punch (76 or 76a) on said column (74 or 74a).

**Patentansprüche**

1. Vorrichtung (50 bzw. 110) zur Bildung von Bolzen-Löchern (36) und einer mittleren Pilot-Einbau-Öffnung (30) in einem vorgeformten Fahrzeug-Rad (16 bzw. 112), das eine Felge (18) mit einem Reifenwulst-Sitzbereich (20, 22) und eine inwendig von der besagten Felge (18) getragene Rad-Einbau-Scheibe (24) enthält, wobei die Vorrichtung umfaßt:

eine Umfangs-Folge von Festlege-Mitteln (100), die in einer planaren Anordnung vorgesehen sind, um wahlweise den besagten Wulst-Sitzbereich (20, 22) zu erfassen und auf einer ersten Achse zu halten,

eine erste Stanzwerkzeug-Baugruppe (52), die auf einer Seite der besagten planaren Anordnung in Richtung der besagten ersten Achse hin und her bewegbar angebracht ist, zum Angriff an einer Seite der Scheibe (24) eines Rades (16 bzw. 112), das von den besagten Festlege-Mitteln (100) ergriffen und gehalten ist, mit inbegriffen eine Anzahl von ersten Lochstempeln (56) zum Durchlochen der besagten Scheibe (24), um die besagten Bolzen-Löcher (36) zu bilden, wobei die Gesamtheit der besagten Bolzen-Löcher (36) auf einer zweiten Achse zentriert ist,

Mittel zum Bilden der besagten mittleren Pilot-Öffnung (30),

erste Positionier-Mittel zum wahlweisen und individuellen Positionieren der besagten Festlege-Mittel (100) und demzufolge der besagten ersten Achse bezüglich der besagten zweiten Achse, um so eine vorgewählte Beziehung der besagten zweiten Achse zu der besagten ersten Achse herzustellen, und

eine zweite Stanzwerkzeug-Baugruppe (82) auf der entgegengesetzten Seite der besagten Anordnung zum Angriff an der besagten entgegengesetzten Seite der besagten Scheibe (24), um die besagte Scheibe (24) gegen Durchbiegung infolge des Angriffs der ersten Stanzwerkzeug-Baugruppe (52) abzustützen,

dadurch gekennzeichnet, daß sie umfaßt:

Stempel-Mittel (74, 76 bzw. 74a, 76a), die in fester Position auf der besagten entgegengesetzten Seite der besagten planaren Anordnung angebracht sind und einen Scher-Stempel (76 bzw. 76a) zum Angriff an der besagten entgegengesetzten Seite der besagten Scheibe (24) enthalten, um die besagte mittlere Pilot-Öffnung (30) zu bilden,

zweite Positionier-Mittel (77), um wahlweise die Achse des besagten Scher-Stempels (76 bzw. 76a) mit Bezug auf die besagte erste Achse zu positionieren,

wobei die besagte Vorrichtung weiterhin dadurch gekennzeichnet ist, daß die besagte zweite Stanzwerkzeug-Baugruppe (82) zur verknüpften Bewegung mit den besagten Festlege-Mitteln (100) parallel zu der besagten ersten und der besagten zweiten Achse so angeordnet ist, daß es der besagten Scheibe (24) ermöglicht ist, in formenden Eingriff mit dem besagten Scher-Stempel (76 bzw. 76a) gebracht zu werden, während der besagte Felgen-Wulst-Sitzbereich (20, 22) von den besagten Festlege-Mitteln (100) ergriffen und gehalten ist.

2. Vorrichtung (50 bzw. 110) nach Anspruch 1, dadurch gekennzeichnet, daß die erste Stanzwerkzeug-Baugruppe (52) eine Stanzen-Basis (54) einschließt, an der die besagte Anzahl von ersten Lochstempeln (56) befestigt ist, die von ihr axial in einer Kreisanordnung um die besagte zweite Achse vorsteht, um die besagten Bolzen-Löcher (36) zu stanzen, einen Setzkopf (64), der für eine axiale Bewegung an der besagten Stanzen-Basis (54) angebracht ist, Mittel (66), die den besagten Setzkopf (64) mit Bezug auf die besagte Stanzen-Basis (54) in Richtung auf die besagte planare Anordnung vorspannen, und Anschlag-Mittel (70, 72) zum Begrenzen der Bewegung des besagten Kopfes gegen die besagten Vorspann-Mittel (66), wobei die besagten Anschlag-Mittel (70, 72) mit Bezug auf die besagten ersten Lochstempel (56) und die besagte Basis (54) so positioniert sind, daß die besagten Bolzen-Löcher (36) durch die besagten ersten Lochstempel (56) vor dem Zusammentreffen der besagten Anschlag-Mittel (70, 72) gestanzt und geformt werden.

3. Vorrichtung (50 bzw. 110) nach Anspruch 1, dadurch gekennzeichnet, daß die besagten angreifenden Mittel (74, 76 bzw. 74a, 76a) eine Mittel-Säule (74 bzw. 74a) enthalten, die an einem Ende fest angebracht ist, und wobei der besagte Scher-Stempel (76 bzw. 76a) am entgegengesetzten Ende der besagten Säule (74 bzw. 74a) angeordnet ist, um die besagte mittlere Pilot-Öffnung (30) zu bilden, wobei die besagte zweite Stanzwerkzeug-Baugruppe (82) eine Mittelöffnung (86) enthält, welche den besagten Scher-Stempel (76 bzw. 76a) und die besagte Säule (74 bzw. 74a) verschiebbar umgibt.

4. Vorrichtung (50 bzw. 110) nach Anspruch 3, dadurch gekennzeichnet, daß die zweiten Positionier-Mittel (77) aus einer drehbaren exzentrischen Anbringung des besagten Scher-Stempels (76 bzw. 76a) auf der besagten Säule (74 bzw. 74a) bestehen.

**Revendications**

1. Appareil (50 ou 110) pour pratiquer des ouvertures (36) de passage de goujons et une ouverture de montage (30) à pilotage central dans une roue de véhicule préformée (16 ou 112), comprenant une jante (18) munie d'une région (20, 22) de sièges de talon de pneu et un disque (24) de montage de roue porté intérieurement par ladite jante (18), ledit appareil comprenant:

une série circonférentielle de moyens de mise en place (100) disposés dans un plan commun et destinés à prendre contact avec et à maintenir de façon sélective ladite région (20, 22) de sièges de talon sur un premier axe,

un premier ensemble (52) à matrice monté d'un côté dudit plan commun de façon à pouvoir se déplacer en va-et-vient parallèlement audit premier axe pour venir au contact d'une face du disque (24) d'une roue (16 ou 112) qui est en contact avec et maintenue par lesdites moyens de mise en place (100), et comprenant une pluralité de premiers poinçons (56) destinés à percer ledit disque (24) pour pratiquer lesdites ouvertures (36) de passage de goujons, l'ensemble formé par lesdites ouvertures (36) de passage de goujons étant centré sur un deuxième axe,

des moyens pour pratiquer ladite ouverture de pilotage central (30),

des premiers moyens de positionnement pour positionner, de façon sélective et individuelle, lesdits moyens de mise en place (100) et donc ledit premier axe par rapport audit deuxième axe de façon à assurer une relation présélectionnée entre ledit deuxième axe et ledit premier axe, et

un deuxième ensemble (82) à matrice disposé du côté opposé de ladite rangée et destiné à prendre contact avec la face opposée dudit disque (24) pour supporter ledit disque (24) contre la déviation engendrée par la mise en contact dudit premier ensemble (52) à matrice,

caractérisé en ce qu'il comprend:

des moyens de poinçonnage (74, 76 ou 74a, 76a) montés en position fixe dudit côté opposé dudit plan commun et comportant un poinçon de découpe (76 ou 76a) destiné à entrer en contact avec ladite face opposée dudit disque (24) pour pratiquer ladite ouverture de pilotage central (30),

des deuxièmes moyens de positionnement (77) pour positionner de façon sélective l'axe dudit poinçon de découpe (76 ou 76a) par rapport audit premier axe,

ledit appareil étant en outre caractérisé en ce que ledit deuxième ensemble (82) à matrice est monté de manière à pouvoir se déplacer conjointement avec lesdits moyens de mise en place (100), parallèlement auxdits premier et deuxième axes, de façon à permettre audit disque (24) d'être amené en contact de formage avec ledit poinçon de découpe (76 ou 76a) alors que ladite région (20, 22) de sièges de talon du pneu est en contact avec et maintenue par lesdits moyens de mise en place (100).

2. Appareil (50 ou 110) selon la revendication 1, caractérisé en ce que ledit premier ensemble (52) à matrice comprend un support (54) de matrice comportant ladite pluralité de premiers poinçons (56), lesquels sont fixés audit support, en dépassant axialement en une rangée circulaire autour dudit deuxième axe de façon à percer lesdites ouvertures (36) de passage de goujons, une tête (64) de matrice montée de façon à pouvoir se déplacer axialement sur ledit support (54) de matrice, des moyens (66) sollicitant ladite tête (64) de matrice par rapport à ladite base (54) en direction dudit plan commun et des moyens d'arrêt (70, 72) destinés à limiter le déplacement de ladite tête contre lesdits moyens de sollicitation (66), lesdits moyens d'arrêt (70, 72) étant positionnés par rapport auxdits premiers poinçons (56) et audit support (54) de telle façon que lesdites ouvertures (36) de passage de goujons soient percées et formées par lesdits premiers poinçons (56) avant que lesdits moyens d'arrêt (70, 72) soient en prise.

3. Appareil (50 ou 110) selon la revendication 1, caractérisé en ce que lesdits moyens (74, 76 ou 74a, 76a) de mise en contact comprennent une colonne centrale (74 ou 74a) fixée à l'une de ses extrémités et ledit poinçon de découpe (76 ou 76a) est monté à l'extrémité opposée de ladite colonne (74 ou 74a) de façon à former ladite ouverture de pilotage central (30), ledit deuxième ensemble (82) à matrice comportant une ouverture centrale (86) entourant de façon coulissante ledit poinçon de découpe (76 ou 76a) et ladite colonne (74 ou 74a).

4. Appareil (50 ou 110) selon la revendication 3, caractérisé en ce que lesdits deuxièmes moyens de positionnement (77) consistent en un montage excentrique rotatif dudit poinçon de découpe (76 ou 76a) sur ladite colonne (74 ou 74a).

FIG. 1

FIG. 3.

FIG. 2

FIG. 10

FIG. 4

FIG. 5

EP 0 180 507 B1

FIG. 6

FIG. 7

3

FIG. 8

FIG. 9